# EUROPÄISCHE PATENTANMELDUNG

(11) **EP 0 625 382 A1**
(43) Veröffentlichungstag der Anmeldung: **23.11.1994**
(21) Anmeldenummer: 94101164.5
(22) Anmeldetag: 27.01.1994
(51) Int. Cl.: B09B 3/00, A62D 3/00

(54) **Verfahren und Vorrichtung zum Austrag von Öl aus Gemischen des Öls mit festen Substanzen**

(30) Priorität: 11.03.1993 DE 4307701
(71) Anmelder: Herm. J. Hellmers GmbH, D-22113 Hamburg (DE)
(72) Erfinder: Schramek, Otto, D-88441 Mittelbiberach (DE); Harder, Michael, D-21037 Hamburg (DE); Kleberg, Bert, D-21033 Hamburg (DE); Haschke, Peter, D-21029 Hamburg (DE)
(74) Vertreter: Niedmers, Ole, Dipl.-Phys.

(57) **Zusammenfassung**

Es wird ein Verfahren und eine Vorrichtung (10) zum Austrag von Öl (26) aus Gemischen des Öls (26) mit festen Substanzen (22) wie Sand, Erdreich oder dergleichen mittels einer fahrbaren Einrichtung vorgeschlagen.
Dabei wird in den Behälter (10) mit einer Einrichtung (11) das Öl-Substanzgemisch (15) eingegeben und ebenfalls über einen in den Behälter (10) mündenden Wassereinlaß (12) Wasser. Das sich im Behälter (10) befindende Wasser (14) wird dann mit dem Öl-Substanzgemisch (15) zur Bildung eines Öl-Wasser-Substanzgemisches (16) vermischt. Anschließend wird vom Öl-Wasser-Substanzgemisch (16) die Substanz (22) getrennt und nachfolgend das Öl (26) vom verbleibenden Öl-Wasser-Gemisch (25).

## Beschreibung

Die Erfindung betrifft ein Verfahren zum Austrag von Öl aus Gemischen des Öls mit festen Substanz wie Sand, Erdreich oder dergleichen mittels einer fahrbaren Einrichtung sowie eine Vorrichtung zur Ausführung eines derartigen Verfahrens.

Aus der deutschen Patentanmeldung P 42 08 506.3 ist eine Entsorgungsvorrichtung zum Abscheiden von Öl aus Schmutzwasser bekannt. Die dort beschriebene Vorrichtung ist lediglich in der Lage, Öl oder andere Kohlenwasserstoffe aus Schmutzwasser abzuscheiden. Diese Vorrichtung stellt jedoch keine Lösung oder Anregung zur Lösung für den Fall dar, wo beispielsweise Öl mit Sand, Erdreich oder dergleichen vermischt ist und der bzw. das mit Öl oder anderen Kohlenwasserstoffen kontaminierte Sand, Erdreich oder dergleichen, im folgenden vereinfacht Sand, vermischt ist und der Sand vom Öl befreit werden soll.

Eine Kontaminierung von Sand mit Öl ist häufig anzutreffen bei land- oder schienengebundenen Öltransportfahrzeugen und dergleichen, bei denen das Öl nach Beschädigung des Tanks ausläuft und sich mit dem Sand vermischt. In der Regel wird dabei dann der mit Öl kontaminierte Sand abgetragen und auf geeignet vorbereiteten Deponien gelagert. Diese Lagerung des ölkontaminierten Sandes auf Deponien ist höchst unbefriedigend, da dort per se keine Abscheidung des Öls vom Sand erfolgt bzw. erfolgen kann.

Es ist Aufgabe der vorliegenden Erfindung, ein Verfahren und eine Vorrichtung zu schaffen, mit der auch eine Entmischung von Öl aus Gemischen des Öls mit festen Substanzen wie Sand und dergleichen auf einfache Weise möglich sind, wobei angestrebt wird, daß am Ende des Verfahrens der Sand, das Erdreich und dergleichen bzw. die Substanz derart vom Öl befreit ist, daß sie ohne Bedenken wieder ihrer natürlichen Nutzung und/oder ihrem ursprünglichen Zweck ohne Nachteile zugeführt werden kann, wobei das Verfahren an sich einfach und kostengünstig durchführbar sein soll und aufwendige Verfahrensschritte vermieden werden sollen.

Gelöst wird die Aufgabe gemäß der Erfindung durch folgende Verfahrensschritte:
a. Einbringen des Öl-Substanzgemisches in einen Behälter,
b. Zugabe von Wasser zum Öl-Substanzgemisch,
c. Vermischen des Wassers mit dem Öl-Substanzgemisch,
d. Trennen der Substanz vom Öl-Wasser-Substanzgemisch und
e. Trennen des Öls vom verbleibenden Öl-Wasser-Gemisch.

Der Vorteil der erfindungsgemäßen Lösung, wie sie durch das hier beschriebene Verfahren dargestellt ist, besteht im wesentlichen darin, daß mittels dieses Verfahrens faktisch ein ständiger Austragvorgang des Öls aus dem Öl-Wasser-Substanzgemisch und durch einfache Variation der Mischzeit sowie Variation der Zugabe des Wassers eine unmittelbare Anpassung auf den Kontaminierungsgrad der Substanz mit Öl möglich ist. Faktisch wird durch die Vermischung des Öl-Substanzgemisches mit Wasser ein Waschvorgang der kontaminierten Substanz ermöglicht, wobei dann bei ausreichend flüssigem und gut vermischtem Öl-Wasser-Substanzgemisch die Entsorgungsvorrichtung zum Abscheiden von Öl aus Schmutzwasser gemäß der P 42 08 506.3 mit den dort beschriebenen Verfahrensstufen eine Trennung der Substanz vom Öl-Wasser-Substanzgemisch und eine nachfolgende Trennung des Öls vom verbleibenden Öl-Wasser-Gemisch ausführen kann.

Gemäß einer vorteilhaften Ausgestaltung des Verfahrens wird das Wasser unter Druck in den Behälter gegeben, wobei dadurch noch eine größere Bewegung des Gemisches erreicht werden kann und der Misch- und Spüleffekt innerhalb des Behälters verbessert werden kann.

Zusätzlich oder alternativ zum Wasser kann es vorteilhaft sein, während des Vermischvorganges Druckluft in das Öl-Wasser-Substanzgemisch zu geben, wobei die Druckluft einerseits dafür sorgt, daß das Wasser, gegebenenfalls auch die feste Substanz, bewegt wird und das Öl-Wasser-Substanzgemisch zusätzlich vermischt wird.

Der eigentlich Mischvorgang des Öl-Wasser-Substanzgemisches kann vorteilhafterweise dadurch erfolgen, daß das Gemisch im Behälter mit mechanischen Mitteln gemischt wird, beispielsweise mittels einer die Mischung bewirkenden Förderschnecke oder aber auch mit beliebigen anderen geeigneten rotierenden oder sich geeignet bewegenden Mischeinrichtungen innerhalb des Behälters.

Vorteilhaft ist es ebenfalls, die Mischung beispielsweise durch Drehung des Behälters erfolgen zu lassen, und zwar ähnlich derart, wie bei Behältern, die auf Fahrzeugen montiert sind, die Betongemische und dergleichen mischen.

Eine Vorrichtung zur Ausführung des eingangs genannten Verfahrens ist zur Lösung der Aufgabe dadurch gekennzeichnet, daß der Behälter mit einer Einrichtung zum Einbringen des Öl-Substanzgemisches sowie wenigstens einem in den Behälter mündenden Wassereinlaß versehen ist und eine Einrichtung aufweist, mit der das sich im Behälter befindende Wasser mit dem Öl-Substanzgemisch zur Bildung eines Öl-Wasser-Substanzgemisches vermischbar ist.

Eine derartig ausgestaltete Vorrichtung hat den Vorteil, daß diese in der Lage ist, das damit geschaffene Öl-Wasser-Substanzgemisch in eine derartige Konsistenz zu versetzen, daß dieses Gemisch ohne weiteres mit der bekannten Entsorgungsvorrichtung zum Abscheiden von Öl aus Schmutzwasser gemäß der deutschen Patentanmeldung P 42 08 506.3 vom Öl auf einfache Weise befreit werden kann. Es ist somit möglich, die erfindungsgemäße Vorrichtung beispielsweise auf einem gemeinsamen Fahrzeug mit der vorbeschriebenen angemeldeten Entsorgungsvorrichtung zum Abscheiden von Öl aus Schmutzwasser zu kombinieren, so daß faktisch ohne weitere Hilfsmittel oder Zusatzmittel sowie ohne weitere Hilfs- oder Zusatzstoffe eine Entsorgungsvorrichtung geschaffen werden kann, die über nahezu beliebig lange Zeit selbständig arbeitet, wobei außer Betriebsmitteln wie Kraftstoff- oder sonstiger geeigneter Energie nichts weiter erforderlich ist, um die bestimmungsgemäße Funktion aufrechtzuerhalten.

Grundsätzlich kann bei einer vorteilhaften Ausgestaltung der Vorrichtung der Behälter mit einer Filtereinrichtung verbunden werden, in der die Substanz vom Öl-Wasser-Substanzgemisch trennbar ist, wobei die Filtereinrichtung beispielsweise nach einer gegebenenfalls vorzunehmenden Vorabscheidung der größten Menge der Substanz aus einem bestimmten Volumen des Öl-Wasser-Substanzgemisches auf den Zwischenfilter gegeben wird, der derart aufgebaut sein kann, daß Substanzteilchen des Gemisches in einem Auffangbehälter gesammelt werden, dem die Substanz dann in vorgegebenen Intervallen entfernt werden kann.

Diese Filtereinrichtung kann grundsätzlich vorzugsweise auf dem Kommunalfahrzeug angeordnet sein, es ist aber auch möglich, diese Filtereinrichtung grundsätzlich auf einem gesonderten anderen Fahrzeug unterzubringen oder aber die Filtereinrichtung stationär anzuordnen.

Bei einer weiteren vorteilhaften Ausgestaltung der Vorrichtung ist die Filtereinrichtung ausgangsseitig mit einem Ölseparator zur Trennung des Öls vom Öl-Wasser-Gemisch verbindbar, wobei der Ölseparator an sich einen allgemein bekannten Aufbau aufweisen kann. Auch der Ölseparator kann beispielsweise selbst auf dem Kommunalfahrzeug angeordnet sein, es ist jedoch auch hier ebenfalls möglich, den Ölseparator beispielsweise in Kombination mit der Filtereinrichtung auf einem anderen Fahrzeug oder aber auch stationär anzuordnen.

In beiden vorgenannten Fällen, in denen die Filtereinrichtung und/oder der Ölseparator auf einem gemeinsamen Fahrzeug wie die Vorrichtung oder auf einem gesonderten Fahrzeug angeordnet sind, ist es grundsätzlich vorteilhafterweise möglich, die Substanz und auch das Wasser nach der Trennung unmittelbar vor Ort zu belassen, so daß sich dadurch auch erhebliche Verbesserungen ergeben, denn eine kostenträchtiger Abtransport der gereinigten Substanz und des Wassers ist somit nicht mehr nötig.

Um die Mischung des Öl-Wasser-Substanzgemisches zu verbessern, weist die Vorrichtung vorzugsweise eine Mehrzahl von Einlässen auf, über die das Wasser in den Behälter eingebbar ist, wobei zur Verbesserung des Mischvorganges ebenfalls eine Mehrzahl von Düsen vorgesehen sein kann, über die Druckluft in den Behälter gebbar ist.

Grundsätzlich kann die Erzeugung des Wasserdrucks und des Luftdrucks auf an sich beliebige geeignete Weise erfolgen, beispielsweise durch das fahrzeugeigene Aggregat, das auch das Fahrzeug selbst antreibt. Es kann aber auch in bestimmten Fällen vorteilhaft sein, beispielsweise wenn das Fahrzeug, auf dem die Vorrichtung angeordnet ist, lediglich ein Fahrzeug in Form eines Anhängers ist, ein gesondertes Aggregat zur Erzeugung des Wasserdrucks und/oder ein Aggregat zur Erzeugung des auf die Luft einwirkenden Drucks vorzusehen, das bzw. die vorzugsweise, aber nicht zwingend, am Kommunalfahrzeug angeordnet ist bzw. sind.
Grundsätzlich kann die Vorrichtung beliebig geeignet ausgestaltet sein in Bezug auf die Mechanismen bzw. Einrichtungen, die die Mischung des Öl-Wasser-Substanzgemisches durchführen. So ist es beispielsweise möglich, im Behälter rotierend angeordnete Mittel vorzusehen, beispielsweise in Form einer Förderschnecke, mit der behälterintern eine Vermischung des Öl-Wasser-Substanzgemisches erfolgt. Es ist aber auch möglich, den Behälter vorzugsweise zur Mischung des Öl-Wasser-Substanzgemisches wenigstens um eine Behälterachse drehbar auszubilden, beispielsweise nach Art der an sich bekannten Betonmischbehälter, die auf Fahrzeugen angeordnet sind und sich sogar während des Transports fortwährend drehen.

Die Erfindung wird nun unter Bezugnahme auf die einzige nachfolgende schematische Zeichnung anhand eines Ausführungsbeispieles eingehend beschrieben. Diese zeigt:
einen schematischen vertikalen Längsschnitt durch den Behälter der erfindungsgemäßen Mischvorrichtung für das Öl-Wasser-Substanzgemisch sowie in einem schematischen vertikalen Längsschnitt eine gegebenenfalls mit der Vorrichtung zusammenwirkende Entsorgungsvorrichtung zum Abscheiden von Öl aus Schmutzwasser.

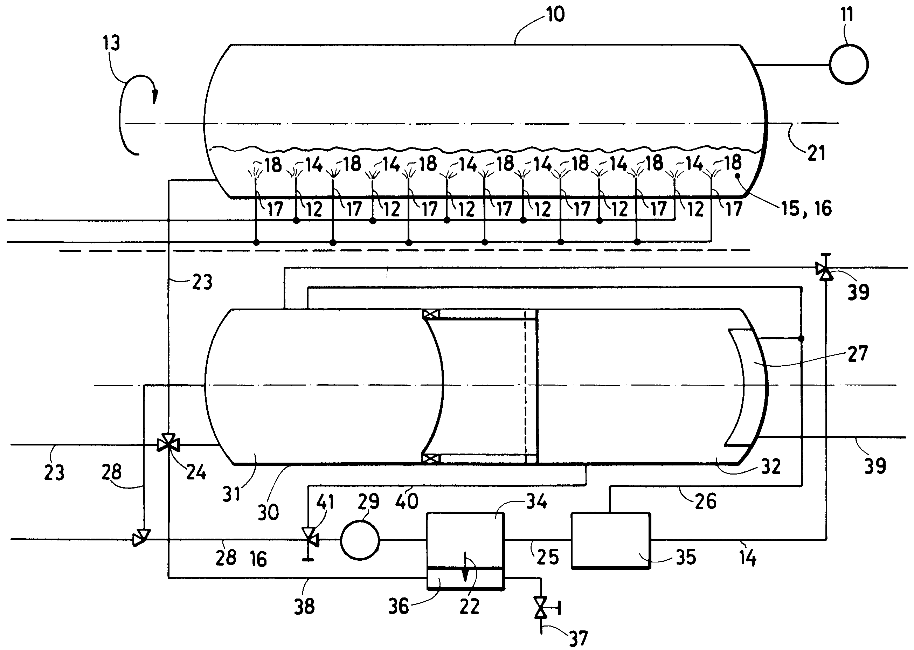

Die in der Figur schematisch dargestellte Vorrichtung zum Austrag von Öl aus Gemischen des Öls mit festen Substanzen wie Sand und Erdreich oder dergleichen besteht im wesentlichen aus einem Behälter 10, in dem hier nicht gesondert dargestellte Mischeinrichtungen 13 wirken beispielsweise in Form eines Schneckenförderers oder in Form von Schaufeln, die auf geeignete Weise angetrieben werden können. Die Mischeinrichtung ist somit lediglich symbolisch durch den um eine Behälterachse 21 gedrehten Pfeil dargestellt.

Der Behälter 10 weist eine Mehrzahl von Wassereinlässen 12 auf, über die Wasser 14 in den Behälterinnenraum überführt werden kann, sowie eine Mehrzahl von Drucklufteinlässen 17 bzw. Druckluftdüsen, über die ebenfalls Druckluft in den Behälterinnenraum eingebracht werden kann. Hier nicht gesondert dargestellte Öffnungen bzw. Ventileinrichtungen sorgen dafür, daß nach dem Einbringen eines Öl-Substanzgemisches 15 in den Innenraum des Behälters 10 der Innendruck des Behälters 10 in etwa dem Außendruck entspricht. Ein Wasserdruckaggregat 19 sowie ein Luftdruckaggregat 20, die geeignet angetrieben werden können, sorgen dafür, daß das Wasser 14 mit einem vorwählbar einstellbaren Druck in den Behälterinnenraum gegeben wird.

Am Behälter 10 ist eine Einrichtung 11 zur Erzeugung eines Vakuums im Behälter 10 angeschlossen, wobei die mit Öl kontaminierte feste Substanz, d.h. das Öl-Substanzgemisch 15, über eine Leitung 23 in den Behälterinnenraum auf bekannte Weise überführt werden kann. Nachdem das Öl-Substanzgemisch 15 in den Behälter 10 eingebracht worden ist, wird unter Zugabe von Wasser 14 über die Wassereinlässe 12 und gegebenenfalls unter gleichzeitiger Zugabe von Druckluft 18 über die Druckluftdüsen 19 in Verbindung mit einer Drehung des Behälters 10 um die Behälterachse 21 oder gegebenenfalls durch im Behälter vorgesehene Mischeinrichtungen eine Vermischung des Öl-Wasser-Substanzgemisches 16 hergestellt, wobei der Flüssigkeitsgrad dieses Gemisches durch eine vorwählbare Menge von Wasser 14 eingestellt werden kann.

Ist eine ausreichende Vermischung gewährleistet und der Flüssigkeitsgrad des Öl-Wasser-Substanzgemisches eingestellt, wird dieses Gemisch über die Leitung 23 und das Ventil 24 in den Schlammabteil 31 eines Behälters 30 gegeben, der zusammen mit anderen Komponenten, auf die im einzelnen noch weiter eingegangen wird, eine Entsorgungsvorrichtung zum Abscheiden von Öl aus Schmutzwasser bildet, vergleiche P 42 08 506.3. Das Öl-Wasser-Substanzgemisch 16 kann aber auch direkt, obwohl hier in der Zeichnung nicht dargestellt, auf eine Filtereinrichtung 34 gegeben werden, in der die Substanz 22 vom Öl-Wasser-Substanzgemisch 16 getrennt wird, was symbolisch in der Filtereinrichtung 34 durch den mit der Bezugsziffer 22 versehenen Pfeil dargestellt ist. Der Filtereinrichtung 34 nachgeschaltet ist ein Ölseparator 35 vorgesehen, der zur Trennung des Öls 26 vom Öl-Wasser-Gemisch 25 dient. Grundsätzlich können der Behälter 10, die Filtereinrichtung 34 sowie der Ölseparator 35 zusammen eine Einheit bilden, die beispielsweise auf einem hier nicht gesondert dargestellten Kommunalfahrzeug angeordnet sind. Auf diese Weise kann unmittelbar eine Trennung vor Ort, d.h. am Ort der durchzuführenden Entsorgung, in die einzelnen Komponenten vorgenommen werden, wobei das den Ölseparator 35 verlassende Öl 26 lediglich in einem Ölbehälter 27 aufgenommen zu werden braucht. Das den Ölseparator 35 verlassende Wasser 14 kann dann an die Umgebung abgelassen werden oder aber erneut für den Spülvorgang im Behälter 10 herangezogen werden. Die die Filtereinrichtung 34 verlassende Substanz 22, d.h. Sand, Erdreich und dergleichen, kann ebenfalls unmittelbar aus dem Auffangbehälter 28 der Filtereinrichtung 34 abgegeben werden.

Beim Zusammenwirken des Behälters 10 mit der Entsorgungsvorrichtung zum Abscheiden von Öl aus Schmutzwasser wird zunächst das Öl-Wasser-Substanzgemisch 16 über die Leitung 23 in den Schlammabteil 31 gegeben und von dort über eine Leitung 28 und eine Pumpe 29 in die Filtereinrichtung 34 gepumpt. Im Schlammabteil 31 kann vor den Ausgang der Leitung 28 ein hier nicht gesondert dargestelltes Vorfilter, beispielsweise in Form einer Lochtrommel, vorgesehen sein, mit dem schon grobe Verunreinigungen zurückgehalten werden.

Das in der Filtereinrichtung sich nunmehr befindende Öl-Wasser-Substanzgemisch 16 wird, wie schon erwähnt, getrennt, wobei eine Vorseparierung von Öl und Wasser stattfindet und andererseits teilchenförmige Verunreinigungen wie Sand, Erde oder sonstige Substanzen abgeschieden werden. Die festen teilchenförmigen Substanzen gelangen an den Boden des Zwischenfilters 34 und von dort durch dort vorgesehene Durchgangsöffnungen in den Auffangbehälter 36. Von Zeit zu Zeit kann der Auffangbehälter 36 geleert werden, in dem beispielsweise Spülwasser 37 zugegeben wird, wobei die sich im Auffangbehälter 36 befindende Substanz entweder an die Umgebung abgegeben wird oder aber, wie in der Zeichnung dargestellt wird, über eine Leitung 38 und das Ventil 24 wiederum in den Schlammabteil 31 des Behälters 30 zurückgeführt wird. So kann beispielsweise das Spülwasser aus dem Auffangbehälter 36 abgesaugt werden, wenn das Schlammabteil 31 evakuiert wird.

Bei der in der Figur dargestellten Ausführungsform wird nachfolgend das im Ölseparator 35 auf bekannte Weise vom Öl-Wasser-Gemisch 25 separierte Öl 26 in einen Behälter 27 gegeben, der Teil des Behälters 10 ist. Ist der Ölbehälter 27 gefüllt, kann das Öl über eine Leitung beispielsweise bei einer Ölsammelstelle abgelassen werden.

Das den Ölseparator 35 verlassende Wasser 14 kann über das Ventil 39 entweder direkt an die Umgebung abgegeben werden oder aber, falls der Ölanteil oberhalb zulässiger Grenzwerte liegt, erneut in den Schlammabteil 31 zurückgeführt werden oder aber, falls das Wasser an sich für einen Spül- oder Mischvorgang gebrauchbar ist, wiederum in den Brauchwasserabteil 32 des Behälters 10. Die Steuerung des Ventils 39 kann beispielsweise durch hier nicht gesondert dargestellte Mittel automatisch erfolgen, beispielsweise durch Anschluß einer eine kontinuierliche Überwachung des Kohlenwasserstoffgehalts des Wassers 14 durchführende computergestützte Einrichtung, die das Wasser 14 entsprechend dem Gehalt an verbleibendem Öl im Wasser 14 kontinuierlich mißt und in Abhängigkeit davon das Ventil steuert.

Grundsätzlich ist es möglich, diesen vorbeschriebenen Reinigungsvorgang in dem vorbeschriebenen Kreislauf mehrere Male durchzuführen, so daß dann das den Ölseparator 35 verlassende Wasser 14 an die Umgebung abgegeben werden kann. Dabei ist es auch möglich, das sich somit im Brauchwasserabteil 32 befindliche Wasser über eine gesonderte Leitung 40 und über das Ventil 41 unter Umgehung des Schlammabteils 31 des Behälters 30 nochmals über die Pumpe 29 direkt auf die Filtereinrichtung 34 zu geben, wobei das Schlammabteil 31 und das gegebenenfalls dort vorgesehene, hier nicht gesondert dargestellte Vorfilter umgangen wird.

In der Filtereinrichtung 34 sind sogenannte Koaleszierplatten vorgesehen, durch die das Öl-Wasser-Substanzgemisch 16 in horizontaler Richtung durchströmt wird. Bei den Koaleszierplatten handelt es sich um Bleche, die im Querschnitt eine wellenartige Struktur aufweisen. Aufgrund der übereinandergeschichteten, wellenartigen Koaleszierplatten wird die Strömungsgeschwindigkeit vermindert und es tritt eine Anreicherungsbewegung der Ölteilchen nach oben ein. Dieses ermöglicht eine bessere Abtrennung des Öls.

Die Koaleszierplatten weisen an den Scheidepunkten der Wellen Durchtrittsöffnungen auf, die einerseits eine Bewegung der Ölbestandteile nach oben und andererseits eine Absetzbewegung der teilchenförmigen Substanzpartikel nach unten ermöglichen. Teilchenförmige Substanzen setzen sich daher an der der Filtereinrichtung und dem Auffangbehälter 36 gemeinsamen Wand ab. Die teilchenförmigen Substanzpartikel gelangen durch die Durchtrittsöffnungen in den Auffangbehälter 36, wobei die Durchtrittsöffnungen durch kreisförmige oder ovale Bohrungen gebildet werden können.

### Bezugszeichenliste

- 10: Behälter
- 11: Einbringeinrichtung
- 12: Wassereinlaß
- 13: Mischeinrichtung
- 14: Wasser
- 15: Öl-Substanzgemisch
- 16: Öl-Wasser-Substanzgemisch
- 17: Druckluftdüse
- 18: Druckluft
- 19: Wasserdruckaggregat
- 20: Luftdruckaggregat
- 21: Behälterachse
- 22: Substanz
- 23: Leitung
- 24: Ventil
- 25: Öl-Wasser-Gemisch
- 26: Öl
- 27: Ölbehälter
- 28: Leitung
- 29: Pumpe
- 30: Behälter
- 31: Schlammabteil
- 32: Brauchwasserabteil
- 33: Leitung/Förderverbindung
- 34: Filtereinrichtung (Zwischenfilter)
- 35: Ölseparator
- 36: Auffangbehälter
- 37: Spülwasser
- 38: Leitung
- 39: Ventil
- 40: Leitung
- 41: Ventil

## Patentansprüche

1. Verfahren zum Austrag von Öl aus Gemischen des Öls mit festen Substanzen wie Sand, Erdreich oder dergleichen mittels einer fahrbaren Einrichtung, gekennzeichnet durch folgende Verfahrensschritte:
a. Einbringen des Öl-Substanzgemisches in einen Behälter,
b. Zugabe von Wasser zum Öl-Substanzgemisch,
c. Vermischen des Wassers mit dem Öl-Substanzgemisch,
d. Trennen der Substanz vom Öl-Wasser-Substanzgemisch,
e. Trennen des Öls vom verbleibenden Öl-Wasser-Gemisch.

2. Verfahren nach Anspruch 1, dadurch gekennzeichnet, daß das Wasser unter Druck in den Behälter gegeben wird.

3. Verfahren nach einem oder beiden der Ansprüche 1 oder 2, dadurch gekennzeichnet, daß während des Vermischvorganges Druckluft in Öl-Wasser-Substanzgemisch gegeben wird.

4. Verfahren nach einem oder mehreren der Ansprüche 1 bis 3, dadurch gekennzeichnet, daß das Öl-Wasser-Substanzgemisch im Behälter mit mechanischen Mitteln gemischt wird.

5. Verfahren nach Anspruch 4, dadurch gekennzeichnet, daß die Mischung durch Drehung des Behälters erfolgt.

6. Vorrichtung zum Austrag von Öl aus Gemischen des Öls mit festen Substanzen wie Sand, Erdreich oder dergleichen mittels einer fahrbaren Einrichtung wie eines einen Behälter aufweisenden Kommunalfahrzeugs, dadurch gekennzeichnet, daß der Behälter (10) mit einer Einrichtung (11) zum Einbringen des Öl-Substanzgemisches sowie wenigsten einem in den Behälter (10) mündenden Wassereinlaß (12) versehen ist und eine Einrichtung (13) aufweist, mit der das sich im Behälter (10) befindende Wasser (14) mit dem Öl-Substanzgemisch (15) zur Bildung eines Öl-Wasser-Substanzgemisches (16) vermischbar ist.

7. Vorrichtung nach Anspruch 6, dadurch gekennzeichnet, daß der Behälter (10) mit einer Filtereinrichtung (34) verbindbar ist, in der die Substanz (22) vom Öl-Wasser-Substanzgemisch (16) trennbar ist.

8. Vorrichtung nach Anspruch 7, dadurch gekennzeichnet, daß die Filtereinrichtung (34) auf dem Kommunalfahrzeug angeordnet ist.

9. Vorrichtung nach einem oder mehreren der Ansprüche 6 bis 8, dadurch gekennzeichnet, daß die Filtereinrichtung (34) ausgangsseitig mit einem Ölseparator (35) zur Trennung des Öls vom Öl-Wasser-Gemisch verbindbar ist.

10. Vorrichtung nach Anspruch 9, dadurch gekennzeichnet, daß der Ölseparator (35) auf dem Kommunalfahrzeug angeordnet ist.

11. Vorrichtung nach einem oder mehreren der Ansprüche 6 bis 10, dadurch gekennzeichnet, daß der Behälter (10) eine Mehrzahl von Einlässen (12) aufweist, über die das Wasser (14) unter Druck in den Behälter (10) gehbar ist.

12. Vorrichtung nach einem oder mehreren der Ansprüche 6 bis 11, dadurch gekennzeichnet, daß der Behälter (10) eine Mehrzahl von Düsen (17) aufweist, über die Druckluft (18) in den Behälter (10) gehbar ist.

13. Vorrichtung nach einem oder beiden der Ansprüche 11 oder 12, dadurch gekennzeichnet, daß ein Aggregat (19) zur Erzeugung des Wasserdrucks und/oder ein Aggregat (20) zur Erzeugung des auf die Luft einwirkenden Drucks vorgesehen ist.

14. Vorrichtung nach Anspruch 13, dadurch gekennzeichnet, daß das Aggregat (19;20) bzw. die Aggregate (19,20) am Kommunalfahrzeug angeordnet sind.

15. Vorrichtung nach einem oder mehreren der Ansprüche 6 bis 14, dadurch gekennzeichnet, daß der Behälter (10) zur Mischung des Öl-Wasser-Substanzgemisches (16) wenigstens um eine Behälterachse (21) drehbar ausgestaltet ist.
